# EUROPEAN PATENT SPECIFICATION

(11) **EP 2 376 349 B1**
(45) Date of publication and mention of the grant of the patent: **31.10.2012**
(21) Application number: 09765021.2
(22) Date of filing: 20.11.2009
(51) Int. Cl.: B29C 43/00, B29K 105/00

(54) **METHOD FOR PRODUCING A THERMOPLASTIC FILM CONTAINING A SUBSTANCE WITH ANTIMICROBIAL ACTIVITY**
VERFAHREN ZUR HERSTELLUNG EINER FOLIE AUS THERMOPLASTISCHEM MATERIAL, DAS EINEN STOFF MIT ANTIMIKROBIELLER WIRKUNG ENTHÄLT
PROCÉDÉ DE FABRICATION D'UN FILM DE MATIÈRE THERMOPLASTIQUE CONTENANT UNE SUBSTANCE AVEC UNE ACTIVITÉ ANTIMICROBIENNE

(30) Priority: 20.11.2008 IT MI20082064
(43) Date of publication of application: 19.10.2011
(73) Proprietor: Universita 'Degli Studi Di Foggia, 71100 Foggia (IT); Consiglio Nazionale delle Ricerche, 00185 Roma (IT)
(72) Inventor: DEL NOBILE, Matteo, Alessandro, I-71043 Manfredonia (IT); CONTE, Amalia, I-71100 Foggia (IT); BUONOCORE, Giovanna, Giuliana, I-80125 Napoli (IT); INCORONATO, Anna, Lucia, I-71036 Lucera (IT); MASSARO, Angelantonio, I-70022 Altamura (IT); PANZA, Olimpia, I-71043 Manfredonia (IT)
(74) Representative: Gitto, Serena
(86) International application number: PCT/EP2009/008290
(87) International publication number: WO 2010/057658

(56) References cited:
- WO-A-00/53413
- WO-A-2004/056214
- CN-A- 101 205 306
- DE-A1- 10 105 110
- DATABASE WPI Week 200658 Thomson Scientific, London, GB; AN 2006-563592 XP002553479 & JP 2006 199852 A (DAINICHISEIKA COLOR & CHEM MFG CO LTD) 3 August 2006 (2006-08-03)

## Description

### Field of application

The present invention relates to the food industry sector, with special reference to that of packaging for food.

More particularly the invention relates to a method for producing a film of thermoplastic material containing substances with antimicrobial activity, suitable for the preparation of packaging for fresh food and able to increase the duration of preservation of this food.

### Prior art

In recent years "active" systems of packaging fresh food (e.g. meat, fish, cheeses, fruit or vegetables) have been developed, based on polymeric materials wherein additives have been incorporated which have antimicrobial and/or antioxidant properties. These materials are used to form rigid or flexible containers with which packaging is made which ensures prolonging of the preservation of the food at ambient or refrigerator temperature.

The active substance incorporated in this packaging, in contact with the food, whether solid or liquid, with a very specific, targeted and, for this reason, generally very effective action, succeeds in slowing down or inhibiting completely the degradation phenomena (of the microbiological or oxidative type) responsible for the unacceptability of the food product preserved and packaged and therefore prolonging its shelf life.

In parallel the environmental awareness of consumers has grown and the demand has increased for packaging for food made with recyclable and possibly also biodegradable materials, in order to reduce the relative environmental impact. Also as regards the additives with antimicrobial and/or antioxidant action there is increasingly frequent demand for them to be as "natural" as possible to avoid the risk of allergic reactions or intoxications.

The active systems developed hitherto generally use plastic materials and/or additives which are not compatible with the abovementioned demand and, in the few cases recyclable and/or biodegradable polymeric materials and natural additives are used, the techniques adopted for the production of the films or sheets of plastic material are unsuitable for an industrial application.

For example Sebastien F. et al. ("Novel biodegradable films made from chitosan and poly(lactic acid) with antifungal properties against mycotoxinogen strains", Carbohydrate Polymers 65, 185-193, 2006) have proposed a PLA film with chitosan filler and properties of inhibition of mycotoxigenic fungal species. This film is obtained by means of the technique of solvent casting, wherein the polymer and the active substance are both dissolved in a solvent and the film is then obtained through evaporation of the solvent.

A similar technique is not suitable for an industrial application as plastic films are obtained industrially, with decidedly lower costs, through extrusion.

The following prior art documents are also known:
DE10105110 concerning a method for the production of a film by extruding a mixture of a crystallisable thermoplastic with additives, such as antimicrobial substances, to form a flat melt film, quenching on a cooling roll, reheating and stretching in the machine direction and the cross direction, heat fixing at 200-280 °C, cooling and winding on a reel.
JP2006199852 concerning a method for the preparation of a film or formed film for the foodstuff by coating a cyclodextrin inclusion material of isocyanic acid esters and/or terpene compounds on a biodegradable film.
WO0053413 concerning a method of incorporating antimicrobial formulations and compositions as coatings inside containers that release the food preservatives slowly into the contacting beverage or food to prevent spoilage.
CN101205306 concerning a method for the preparation of a PE composite preservative packaging membrane for modified atmosphere packaging of foods, said packaging membrane being capable of adjusting the gas compositions in the pack so as to further extend the shelf life of the fresh foods.

To date very few studies have been carried out on the development of antimicrobial biodegradable films through processes of extrusion as the high temperatures and pressures reached inside the extruder can affect the chemical stability of the antimicrobial compound incorporated (which is generally sensitive to heat and thermally unstable) and reduce its efficacy on the micro-organisms responsible for the deterioration of foods.

### Summary of the invention

The problem underlying the present invention was that of making available a method for producing a film of thermoplastic material incorporating substances with antimicrobial activity, which method uses the technology of extrusion without thereby entailing a substantial loss of activity of the substance in question.

A similar problem has been solved by a method which comprises the steps of:
a) providing a thermoplastic polymer having a melting point lower than or equal to 160°C and at least one substance with antimicrobial activity selected from the group consisting of lysozime, thymol and lemon extract;
b) mixing the abovementioned components, heating at a temperature lower than or equal to 160°C, obtaining a uniform mixture,
c) subjecting said mixture to compression in a press heated to the same temperature as for step b);
d) cooling under compression to a temperature lower than or equal to 40°C, obtaining strips, which are divided into short pieces;
e) feeding said short pieces into an extruder provided with a die and with heating means to bring the temperature thereinside to a value lower than or equal to 160°C;
f) extruding said film through the die.

The abovementioned thermoplastic polymer is preferably chosen from the group comprising low density polyethylene (LDPE), polylactic acid (PLA) and polycaprolactone (PCL).

The heating temperature in step b) is preferably comprised between 80 and 160°C.

The temperature in the extruder area at the die is preferably comprised between 110°C and 140°C.

The mixture is generally subjected, in step c), to a pressure of at least 30 bar and preferably comprised between 40 and 60 bar.

The abovementioned substance with antimicrobial activity is generally contained in the abovementioned mixture in an amount ranging from 1 to 20%, preferably from 3 to 15%, by weight of the total weight of the mixture.

The percentages indicated herein below, barring indications to the contrary, are to be understood as by weight of the total weight of the mixture.

More particularly, for the lysozime, amounts comprised between 3 and 10% are preferred; for the thymol between 7 and 15% and for the lemon extract between 3 and 7%.

A thermoplastic polymer particularly preferred for the method according to the invention is PCL. When this polymer is used, the temperature of heating of the mixture inside the extruder is preferably lower than or equal to 120°C and preferably comprised between 80 and 120°C.

The abovementioned step c) of compression is prolonged generally for a time comprised between 1 and 5 minutes.

In another aspect the invention relates to a thermoplastic film based on a polymer chosen from the group comprising low density polyethylene (LDPE), polylactic acid (PLA) and polycaprolactone (PCL) and containing a substance with antimicrobial activity selected from the group consisting of lysozime, thymol and lemon extract, obtainable by means of the method described above.

Preferably, the abovementioned film is obtained from a mixture containing 1 to 20%, preferably from 3 to 15%, of the abovementioned substance with antimicrobial activity.

In a further aspect the present invention relates to a container for food, for example a tray, made by thermoforming of the abovementioned film.

### Brief description of the drawings

Figure la is a graph showing the concentration of viable cells of *M. lysodeikticus* as a function of time in cell suspensions placed in contact with samples of film of LDPE according to the invention, containing lysozime.
Figure 1b is a graph which shows the concentration of viable cells of *M. lysodeikticus* as a function of time in cell suspensions placed in contact with samples of film of PLA according to the invention, containing lysozime.
Figure 1c is a graph which shows the concentration of viable cells of *M. lysodeikticus* as a function of time in cell suspensions placed in contact with samples of film of PCL according to the invention, containing lysozime.
Figure 2a is a graph which shows the normalized absorbance as a function of time of cell suspensions of *Pseudomonas* spp. placed in contact with samples of film of PCL according to the invention, containing lemon extract.
Figure 2b is a graph which shows the normalized absorbance as a function of time of cell suspensions of *Pseudomonas* spp. placed in contact with samples of film of PCL according to the invention, containing thymol.

### Detailed description

The research performed by the Applicants for the purpose of solving the technical problem stated above, using more particularly polymers having at least characteristics of excellent recyclability and possibly also of biodegradability, has led to the selection of three polymers and more specifically polylactic acid (PLA), polycaprolactone (PCL) and low density polyethylene (LDPE).

PLA, more particularly, has biodegradability and is obtained from renewable agricultural sources. Polycaprolactone (PCL) is obtained from oil sources but is biodegradable and has low vitreous transition temperature and a low melting point. The LDPE finally is easily recyclable.

By way of a non-limiting example herein below are the experimental conditions used in an embodiment of the method according to the present invention.

The lysozime and thymol were supplied by Sigma-Aldrich (Italy) and the lemon extract was purchased from Spencer Food Industrial (Amsterdam).

A procedure in three steps was adopted. The first step consists of mixing the polymeric matrix (LDPE, PLA or PLC) with one of the three active substances (lysozime, thymol or lemon extract), using a Haake Rheomix^{®} 600 mixer (Germany). The receptacle of the mixer (volume of 50 cm³) was filled with 50 g of total mass. The speed of rotation and the time of mixing were 20 rpm and 5 minutes. The temperature of mixing was 155°C, 140°C and 80°C for PLA, LDPE and PCL, respectively.

In the second step a P300P heating press (Collin, Germany) was used to prepare strips with thickness of 1 mm. In this press the mixture was compressed for 3 minutes at 50 bar, at a temperature equal to that of mixing, and subsequently cooled at 30°C, always under pressure, obtaining strips. The strips were then cut into small pieces with the purpose of obtaining a material suitable for being fed into an extruder.

The pieces obtained in this way were fed into a co-rotating twinscrew extruder (Prism Eurolab 16, Thermo Electron Corporation), fitted with a flat die with length of 10 cm. The barrel of the extruder comprised 7 areas (total length 40 cm); each area was provided with heating appliances with independent temperature. The pieces mentioned above were introduced into the extruder using a single-screw feeder. The speed of rotation of the feeder was set at 5 rpm while the speed of the screw was 55 rpm, for all the polymeric materials used. The temperature of the areas of feeding, of the intermediate areas and of the final area of the extruder were maintained at 135-150-140.°C, 110-135-130°C and 80-115-110°C for the PLA, LDPE and PCL respectively.

The following mixtures were used:
PLA 97%-lysozime 3%; PLA 95%-lysozime 5%; PLA 90%-lysozime 10%
PLA 93%-thymol 7%; PLA 90%-thymol 10%; PLA 85%-thymol 15%
PLA 97%-lemon extract 3%; PLA 95%-lemon extract 5%; PLA 93%-lemon extract 7%
LDPE97%-lysozime 3%;LDPE 95%-lysozime 5%;LDPE 90%-lysozime 10%
LDPE 93%-thymol 7%; LDPE 90%-thymol 10%;LDPE 85%-thymol 15%
LDPE 97%-lemon extract 3%; LDPE 95%-lemon extract 5%; LDPE93%-lemon extract 7%
PCL 97%-lysozime 3%; PCL 95%-lysozime 5%; PCL 90%-lysozime 10%
PCL 93%-thymol 7%; PCL 90%-thymol 10%; PCL 85%-thymol 15%
PCL 97%-lemon extract 3%; PCL 95%-lemon extract 5%; PCL 93%-lemon extract 7%
The abovementioned mixtures, subjected to the method according to the invention, produced respective films of equal composition.

The antimicrobial activity of the polymeric films containing the three active substances was evaluated.

### 1.

For the evaluation of the antimicrobial activity of the film containing lysozime, *Micrococcus lysodeikticus* was used as test micro-organism in virtue of its high susceptibility to the active enzyme.

The activity of the lysozime was determined by the decrease in the absorbance of the micro-organism inoculated in phosphate buffer. For this purpose a lyophilized cell suspension of *Micrococcus lysodeikticus* (Sigma-Aldrich) was diluted at ambient temperature in 610 ml of phosphate buffer (0.1 M, pH 6.8), reaching a cell concentration of 10⁷ UFC/ml. Each of the films of PCL, LDPE and PLA containing lysozime described above was placed in contact with the abovementioned microbial suspension, using a ratio between volume of solution and active surface of the film of 2:1. The turbidity of the abovementioned suspension, shaken continuously (IKA KS 130 Control GmbH, Germany), was monitored by means of the absorbance at 450 nm (UV 1601 spectrophotometer, Shimadzu) until a constant value was reached.

The normalized absorbance was then used as a gauge of the cell concentration of the target micro-organism used in these tests. As control a measurement was made of the decrease in the absorbance of the microbial suspension in contact with the film without lysozime and the absorbance of the microbial suspension as is, i.e. not subjected to contact with any film. All the analyses were performed in duplicate.

### 2.

For the purpose of evaluating the efficacy of the films containing lemon extract or thymol, turbidimetric tests were carried out. The evidence of the microbial growth was obtained through the reading of the absorbance at 420 nm, using a spectrophotometer (UV 1601 Shimadzu) at regular intervals.

A cocktail of 5 microbial strains of *Pseudomonas* spp. isolated from deteriorated mozzarella was used as test micro-organism. The culture medium used was PCB (plate count broth) (Triptone 5g/L, glucose 1 g/ L, yeast extract 2.5 g/ L).

Initially each strain was grown in plates of PAB (Pseudomonas agar base) at 25°C for 48 hours and then in PCB at the same temperature for a further 2 days. Equal volumes of the suspension of each strain were combined and, after serial dilutions, the cocktail was inoculated in predefined volumes of PCB to carry out the turbidimetric measurements. The final concentration of the microbial count was approximately 10⁵ UFC/ml. Each inoculated medium was placed in contact, respectively, with the films of PCL, PLA and LDPE containing lemon extract and thymol listed above and with corresponding films free from active substance. The ratio between the volume of the solution and the surface of the film was 2:1.

All the samples prepared were incubated at 25°C, under continuous shaking at medium speed, by means of a shaker (IKA KS 130 Control GmbH, Germany). A part of 1 ml was taken periodically from each sample to measure the absorbance thereof. The normalized absorbance was subsequently used as a measure of the cell concentration of the cocktail target. All the analyses were performed in duplicate.

By way of an example the results obtained in the test with *Micrococcus lysodeikticus* described in point 1 are given.

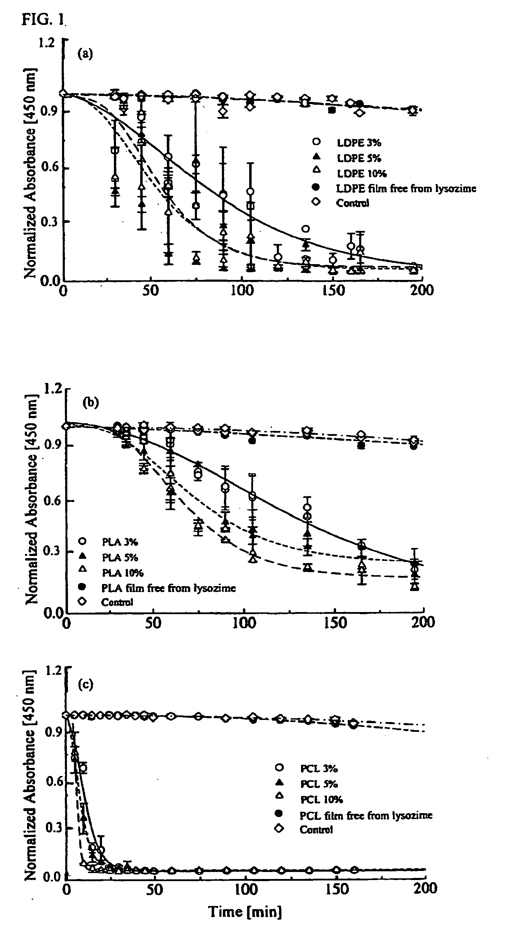

Figures 1a to 1c show in a graph the concentration of viable cells of *Micrococcus lysodeikticus* as a function of time for samples of cell suspensions placed in contact with samples of film according to the invention, containing lysozime. For the purpose of comparison the graphs also show the concentrations of viable cells for control samples of cell suspensions and for samples of cell suspensions placed in contact with samples of film free from antimicrobial substance.

It can be seen clearly from the three graphs that all the films incorporating lysozime according to the present invention are able to reduce significantly the concentration of viable cells of *Micrococcus lysodeikticus* in comparison with the controls and the films free from antimicrobial substance, with a particularly marked effect for the films according to the invention with a PCL base.

This demonstrates that the antimicrobial activity of the lysozime incorporated in the film remained at a good level despite the mechanical and thermal treatments undergone in the various steps of the method according to the present invention.

The antimicrobial activity was also confirmed in the tests performed on *Pseudomonas* spp. according to the procedure described in point 2 above.

The results obtained for the films according to the invention with a base of PCL are given herein below, by way of an example.

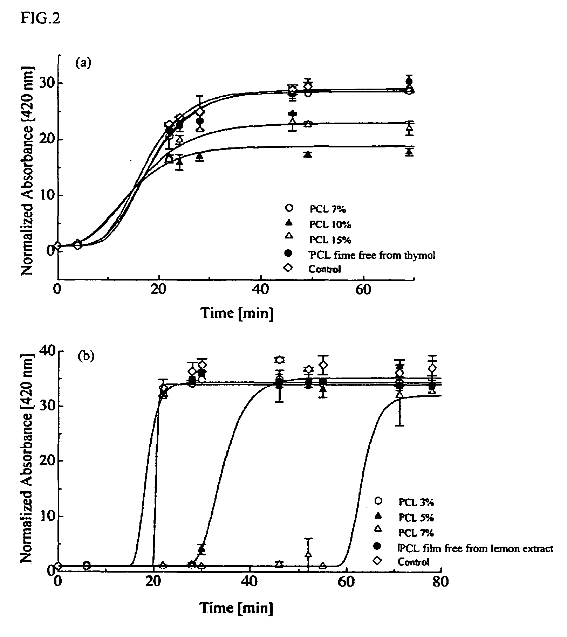

Figures 2a and 2b show in a graph the absorbance corrected to 420 nm as a function of time for samples of cell suspensions of *Pseudomonas* spp. placed in contact with samples of film according to the invention, containing respectively lemon extract and thymol. For the purposes of comparison the graphs also show the corrected absorbances for control samples of cell suspensions and for samples of cell suspensions placed in contact with samples of film free from antimicrobial substance.

It can clearly be seen from the two graphs that the films incorporating lemon extract or thymol according to the present invention are able to reduce significantly the concentration of viable cells of *Pseudomonas* spp. in relation to the controls and to the films free from antimicrobial substance.

## Claims

1. A method for producing a film of thermoplastic material that incorporates substances with antimicrobial activity, which method comprises the steps of:
a) providing a thermoplastic polymer having a melting point lower than or equal to 160°C and at least one substance with antimicrobial activity selected from the group consisting of lysozime, thymol and lemon extract;
b) mixing said components while heating at a temperature lower than or equal to 160°C, thus obtaining a uniform mixture;
c) subjecting said mixture to compression in a press heated to the same temperature as for step b);
d) cooling under compression to a temperature lower than or equal to 40°C, thus obtaining strips, which are divided into short pieces;
e) feeding said pieces into an extruder provided with a die and with heating means to bring the temperature thereinside to a value lower than or equal to 160°C;
f) extruding said film through the die.

2. A method according to claim 1, wherein said thermoplastic polymer is selected from the group comprising low density polyethylene (LDPE), polylactic acid (PLA), polycaprolactone (PCL).

3. A method according to claim 2, wherein the heating temperature in step b) is comprised between 80°C and 160°C.

4. A method according to claim 3, wherein the temperature in the extruder area at the die is comprised between 110°C and 140°C.

5. A method according to any one of claims 2 to 4, wherein said mixture is subjected, in step c), to a pressure of at least 30 bar and preferably comprised between 40 and 60 bar.

6. A method according to any one of claims 2 to 5, wherein the at least one substance with antimicrobial activity is contained in said mixture in an amount ranging from 1% to 20%, preferably 3% to 15%, by weight of the total weight of the mixture.

7. A method according to claim 6, wherein said substance with antimicrobial activity is lysozime, contained in amounts ranging between 3% and 10%, or thymol, contained in amounts ranging between 7% and 15%, or lemon extract, contained in amounts ranging between 3% and 7%.

8. A method according to any one of claims 2 to 7, wherein said thermoplastic polymer is PCL and the heating temperature of said mixture inside the extruder is lower than or equal to 120°C, preferably comprised between 80°C and 120°C.

## Patentansprüche

1. Verfahren zur Herstellung einer Folie aus thermoplastischem Material, das Substanzen mit antimikrobieller Aktivität enthält, welches Verfahren die folgenden Schritte umfasst:
a) Bereitstellen eines thermoplastischen Polymers mit einem Schmelzpunkt, der niedriger als oder gleich 160°C ist, und mindestens einer Substanz mit antimikrobieller Aktivität, die aus der Gruppe, welche aus Lysozym, Thymol und Zitronenextrakt besteht, ausgewählt ist;
b) Mischen der Komponenten unter Erwärmen auf eine Temperatur niedriger als oder gleich 160°C, wodurch eine gleichförmige Mischung erhalten wird;
c) Unterwerfen der Mischung einer Kompression in einer Presse, welche auf die selbe Temperatur wie für Schritt b) erwärmt ist;
d) Abkühlen unter Kompression auf eine Temperatur niedriger als oder gleich 40°C, wodurch Streifen erhalten werden, die in kurze Stücke zerteilt werden;
e) Einführen der Stücke in einen Extruder, der mit einer Düse und mit Heizmitteln, um die Temperatur im Innern auf einen Wert von niedriger als oder gleich 160°C zu bringen, ausgerüstet ist;
f) Extrudieren der Folie durch die Düse.

2. Verfahren nach Anspruch 1, wobei das thermoplastische Polymer aus der Gruppe ausgewählt ist, welche Polyethylen niedriger Dichte (LDPE), Polymilchsäure (PLA), Polycaprolacton (PCL) umfasst.

3. Verfahren nach Anspruch 2, wobei die Erwärmungstemperatur in Schritt b) im Bereich zwischen 80 und 160°C liegt.

4. Verfahren nach Anspruch 3, wobei die Temperatur in dem Extruderbereich an der Düse im Bereich zwischen 110°C und 140°C liegt.

5. Verfahren nach einem der Ansprüche 2 bis 4, wobei die Mischung in Schritt c) einen Druck von mindestens 30 Bar und vorzugsweise im Bereich zwischen 40 und 60 Bar unterworfen wird.

6. Verfahren nach irgend einem der Ansprüche 2 bis 5, wobei die mindestens eine Substanz mit antimikrobieller Aktivität in der Mischung in einer Menge im Bereich von 1 % bis 20 %, vorzugsweise 3 % bis 15 %, bezogen auf das Gesamtgewicht der Mischung enthalten ist.

7. Verfahren nach Anspruch 6, wobei die Substanz mit antimikrobieller Aktivität Lysozym ist, das in Mengen im Bereich zwischen 3 % und 10 % enthalten ist, oder Thymol, das in Mengen im Bereich zwischen 7 % und 15 % enthalten ist, oder Zitronenextrakt, der in Mengen im Bereich zwischen 3 % und 7 % enthalten ist.

8. Verfahren nach irgendeinem der Ansprüche 2 bis 7, wobei das thermoplastische Polymer PCL ist und die Erwärmungstemperatur der Mischung innerhalb des Extruders niedriger oder gleich 120°C ist, vorzugsweise im Bereich zwischen 80°C und 120°C liegt.

## Revendications

1. Procédé de production d'un film de matériau thermoplastique qui incorpore des substances présentant une activité antimicrobienne, ledit procédé comprenant les étapes consistant à :
a) fournir un polymère thermoplastique présentant un point de fusion inférieur ou égal à 160 °C et au moins une substance présentant une activité antimicrobienne sélectionnée dans le groupe composé d'un lysozyme, du thymol et d'un extrait de citron ;
b) mélanger lesdits composants tout en chauffant à une température inférieure ou égale à 160 °C, pour ainsi obtenir un mélange uniforme ;
c) soumettre ledit mélange à une compression dans une presse chauffée à la même température que pour l'étape b) ;
d) refroidir sous compression à une température inférieure ou égale à 40 °C, pour obtenir ainsi des bandes, qui sont divisées en petits morceaux ;
e) amener lesdits morceaux dans une extrudeuse munie d'une filière et de moyens de chauffage pour amener la température à l'intérieur de celle-ci à une valeur inférieure ou égale à 160 °C ;
f) extruder ledit film à travers la filière.

2. Procédé selon la revendication 1, dans lequel ledit polymère thermoplastique est sélectionné dans le groupe composé du polyéthylène basse densité (LDPE), de l'acide polylactique (PLA) et de la polycaprolactone (PCL).

3. Procédé selon la revendication 2, dans lequel la température de chauffage de l'étape b) est comprise entre 80 °C et 160 °C.

4. Procédé selon la revendication 3, dans lequel la température dans la zone de l'extrudeuse au niveau de la filière est comprise entre 110 °C et 140 °C.

5. Procédé selon l'une quelconque des revendications 2 à 4, dans lequel ledit mélange est soumis, à l'étape c), à une pression au moins égale à 30 bar, et comprise de préférence entre 40 et 60 bar.

6. Procédé selon l'une quelconque des revendications 2 à 5, dans lequel la substance présentant une activité antimicrobienne, au moins au nombre de une, est contenue dans ledit mélange dans une quantité comprise entre 1 % et 20 %, de préférence entre 3 % et 15 %, en poids du poids total du mélange.

7. Procédé selon la revendication 6, dans lequel ladite substance présentant une activité antimicrobienne est un lysozyme, contenu dans des quantités comprises entre 3 % et 10 %, ou du thymol, contenu dans des quantités comprises entre 7 % et 15 %, ou un extrait de citron, contenu dans des quantités comprises entre 3 % et 7 %.

8. Procédé selon l'une quelconque des revendications 2 à 7, dans lequel ledit polymère thermoplastique est la PCL et la température de chauffage dudit mélange à l'intérieur de l'extrudeuse est inférieure ou égale à 120 °C, de préférence comprise entre 80 °C et 120 °C.
